# EUROPEAN PATENT APPLICATION

(11) **EP 4 193 821 A1**
(43) Date of publication of application: **14.06.2023**
(21) Application number: 22211381.3
(22) Date of filing: 05.12.2022
(51) Int. Cl.: A01B 69/08, A01B 59/00

(54) **A METHOD AND AN APPARATUS FOR CONTROLLING A HITCH OF A WORK VEHICLE**

(30) Priority: 07.12.2021 IT 202100030842
(71) Applicant: CNH Industrial Italia S.p.A., 10156 Torino (IT)
(72) Inventor: PACHLER, Tobias, 4880 Berg im Attergau (AT); PUTZ, Markus, A-3352 Sankt Peter in der Au (AT)
(74) Representative: CNH Industrial IP Department

(57) **Abstract**

A method for controlling a hitch (2) of a work vehicle (1) includes determining a quantity indicative of a steering angle of the work vehicle (1), and relieving an amount of weight of an implement (IM) attached to the hitch (2) as a function of the determined quantity.

## Description

### TECHNICAL FIELD

The invention concerns a method and an apparatus for controlling a hitch of a work vehicle, specifically a front hitch of an agricultural vehicle.

### BACKGROUND OF THE INVENTION

As known, work vehicles like agricultural vehicles are provided with at least one hitch arranged at the front and/or at the rear for the attachment of implements of various kind, such as packers, harrows, mowers, pickup rakes, and the like.

The hitch is usually configured as a mechanism for raising and lowering the attached implement relatively to the soil.

The implement operates in contact with the soil; therefore, the soil supports the weight of the implement during the use thereof.

In other words, without an intervention of the hitch, the soil reacts to the weight of the implement with a force that balances the weight.

The fact that all the weight of the implement is exerted on the soil is beneficial to the quality of the implement operation.

On the other hand, the mobility of the vehicle is hindered and the difficulties in steering the vehicle are increased.

In some vehicles, the hitch can be electronically controlled to relieve at least a portion of the weight of the implement on the soil by transferring that portion to an axle of the vehicle, precisely the one closer to the hitch.

Indeed, the hitch can be controlled to exert a force component on the implement, which opposes to the implement weight in order to compensate at least a portion of the implement weight, such that the implement remain in contact with the soil without exerting all its weight on the soil, but only the portion that has not been compensated by the force component.

Actually, with this control, the implement can metaphorically float on the soil, thereby following its altimetry variation.

The control is known in the art as pressure relief control and is specifically carried out by a control unit of the vehicle, in particular under commands imparted by the driver of the vehicle.

For example, the driver can select an amount of weight to be relieved by means of a control panel or a control member coupled to the control unit.

In general, the need is felt for an improvement of the operation of the vehicle, in particular under the points of view of safety, stability, quality, and nonetheless comfort of the driver.

An object of the invention is to satisfy the above-mentioned needs, preferably in a simple and cost effective manner.

### SUMMARY OF THE INVENTION

The object is achieved by a method and an apparatus as defined by the independent claims.

Dependent claims set out particular embodiments of the invention.

### BRIEF DESCRIPTION OF DRAWINGS

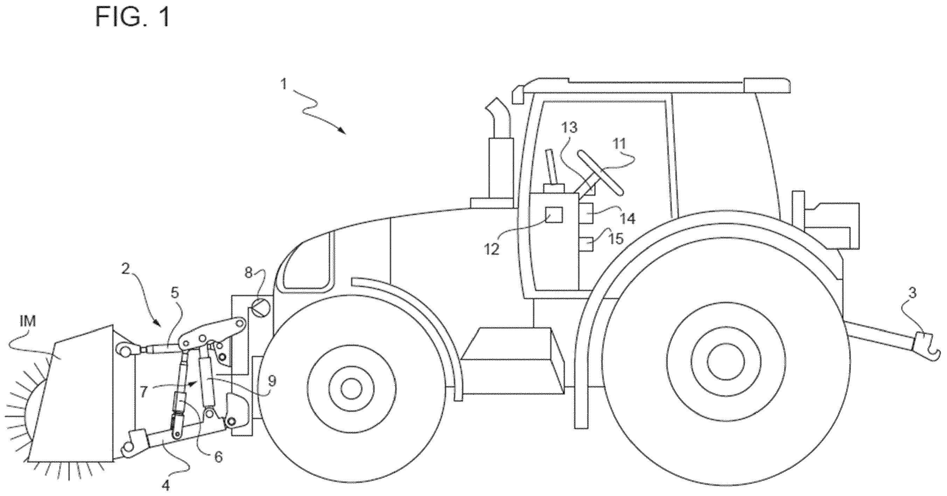

For a better understanding of the invention, a specific embodiment is disclosed in the following, by way of a nonlimiting example, with reference to the attached Figure 1, which is a schematic representation of a work vehicle comprising an apparatus according to the invention.

### DETAILED DESCRIPTION OF THE INVENTION

Figure 1 shows a work vehicle 1, specifically an agricultural vehicle, in particular a tractor.

Vehicle 1 comprises a front hitch 2 and a rear hitch 3.

An implement IM is attached to the hitch 2 and is configured to operate in contact with the soil.

More precisely, the hitch 2 is a three point-hitch.

Therefore, the hitch 2 comprises two parallel arms 4, of which only one is shown in Figure 1, and a third arm 5 arranged above and between the arms 4. The arms 4, 5 are hinged to a body 6 of vehicle 1, thereby being rotatably coupled thereto about respective horizontal axes, orthogonal to an horizontal advancing direction of vehicle 1.

Vehicle 1 comprises a driving assembly 7, which is controllable or configured to raise the hitch 2 from a lowermost to an uppermost configuration.

Clearly, the driving assembly 7 may be also controllable or configured to lower the hitch 2 from the uppermost configuration to the lowermost configuration.

Correspondingly, the implement IM can be raised or lowered with respect to the soil by raising or lowering the hitch 2, respectively.

Furthermore, more in general, the driving assembly 7 is controllable or configured to apply a force component on the implement IM.

The force component opposes to gravity and therefore to the weight of the implement IM.

In this manner, the driving assembly 7 can relieve or support an amount of weight of the implement IM, meaning for example that the driving assembly 7 applies the force component to compensate or balance the amount of weight.

Therefore, the driving assembly 7 is controllable or configured to relieve or support the amount of weight.

While the driving assembly 7 relieves the amount of weight, the implement IM is not raised but the amount of weight is transferred from the soil to the vehicle 1, specifically to an axle thereof, more specifically the one being closer to the hitch 2.

Preferably, the driving assembly 7 is of the hydraulic kind. Accordingly, vehicle 1 further comprises a pump 8 controllable to supply the driving assembly 7 with fluid and conveniently one or more not shown valve devices controllable or configured to adjust the pressure of the fluid supplied to the driving assembly 7.

More in detail, the driving assembly 7 comprises at least one hydraulic actuator 9 to relieve the amount of weight; specifically, the driving assembly 7 comprises two actuators 9 coupled to the arms 4.

Precisely, the actuators 9 may drive the arms 4 in rotation, thereby variating the angle thereof with respect to the advancing direction.

The amount of weight relieved, i.e. the force component applied to the implement IM, depends on the pressure within the actuators 9, namely the pressure of the fluid supplied thereto.

The pressure within the actuators 9 may be adjusted by means of the pump 8 and/or the valve devices.

The higher is the pressure the greater is the amount of weight relieved.

Other than the driving assembly 7, vehicle 1 further comprises a steering assembly 10 configured to set a steering angle of vehicle 1.

For example, the steering assembly 10 comprises a steering wheel 11 that is rotatable by a driver or user of vehicle 1 to set the steering angle.

Indeed, one value of a rotation angle of the steering wheel 11 corresponds to one value of the steering angle.

According to the invention, vehicle 1 further comprises an apparatus for controlling the hitch 2, i.e. for relieving the amount of weight of the implement IM.

The apparatus comprises a control unit 12 configured to determine a quantity indicative of the steering angle of vehicle 1 and to control the driving assembly 7 as a function of the determined quantity.

The quantity may correspond to the rotation angle of the steering wheel 11 or, more preferably, directly to the steering angle.

For example, the apparatus comprises a transducer 13 configured to detect a further quantity indicative of the rotation angle of the steering wheel 11, such as a current or voltage proportional to the rotation angle.

The latter quantity is indicative of the former one due to the correspondence between the rotation angle and the steering angle.

According to an alternative example, the transducer 13 is configured to detect directly the former quantity, such as current or voltage proportional to the steering angle.

According to this alternative example, the transducer 13 may be coupled to an axle of vehicle 1 or to one or more of the wheels (the ones in contact with the soil) of the vehicle 1. The transducer 13 may be configured in this case to detect the quantity indicative of the steering angle, independently from the rotation angle of the steering wheel 11. Transducers of this kind for determining the steering angle are commonly present in known work vehicles. This is particularly useful when vehicle 1 may be autonomously controlled by control unit 12; in this case, the steering angle of vehicle 1 may change without any movement of the steering wheel 11.

The transducer 13 is further configured to generate a signal associated to the detected quantity.

Control unit 12 is coupled to the transducer 13 to receive the generated signal.

Therefore, control unit 12 determines the quantity by extracting a related piece of information from the signal generated by the transducer 13.

Regarding the control of the driving assembly 7, control unit 12 may be coupled to the pump 8 and/or to the valve devices in order to control them to adjust the pressure within the actuators 9 as a function of the determined quantity.

In other words, the control of the driving assembly 7 involves the adjusting of the pressure within the actuators 9.

More in detail, the driving assembly 7 is controlled to increase or decrease the amount of weight relieved, i.e. the force component opposing to the weight, as more as the quantity indicates higher or lower values of the steering angle, respectively.

In other words, the higher is the steering angle the more the amount of weight relieved is or, namely, the greater is the applied force component opposing to the weight.

This means that the pressure within the actuators 9 is raised with the increase of the steering angle.

Indeed, as already mentioned, the actuators 9 relieve more weight as more as the pressure therein is higher.

Optionally, the apparatus further comprises an activating command 14, such as a button, a lever, a touch pad, a knob, and the like, which is operable by the driver and coupled to control unit 12.

The activating command 14 is configured to express an activation signal based on an operation of the activating command 14 itself. The activating command 14 may emit the activation signal, for example when actually operated (e.g. when the button is pressed or the lever is manipulated) or, alternatively, when not operated (e.g. not touched by the driver) .

The activation signal is anyway indicative of the corresponding operation of the activating command 14.

For the sake of clarity, even the non-manipulation of the activating command 14 may be considered, for example, as an "operation" thereof.

Here, control unit 12 is configured to detect the activation signal, in particular the emission thereof by the activating command 14.

Control unit 12 is in this case further configured to activate the control of the driving assembly 7 as a function of the determined quantity, only during, at, or after the detection of the activation signal.

Otherwise, while the activation signal is not detected, control unit 12 controls the driving assembly 7 independently of the quantity.

The expression "activation signal" shall be interpreted here generically as information useful to evaluate if the control as a function of the determined quantity is to be activated or not. For example, even the lack of an electric current flow from the activating command 14 to the control unit 12 may be interpreted as the "activation signal".

Optionally, control unit 12 is configured to set a control function corresponding to a gain between the quantity and the amount of weight relieved by the driving assembly 7.

More precisely, according to the control function, values of the quantity are associated to corresponding values of the amount of weight relieved..

For example, the control function may be a settable constant gain between the quantity and the amount of weight.

In particular, given a specific value of the quantity, e.g. of the steering angle, a higher constant gain set corresponds to a greater amount of weight relieved.

Control unit 12 controls in this case the driving assembly 7 to relieve the amount of weight according to the set control function.

For example, control unit 12 may be configured to set the control function to one of a plurality of predetermined constant gains. The predetermined gains may be stored by control unit 12.

Furthermore, preferably, the apparatus may comprise a setting command 15 being operable by the driver and configured to emit a setting signal, in particular as a function of how the setting command 15 is operated.

The setting signal carries a piece of information about a request of the driver about the control function to be set by control unit 12.

For example, the driver can at least operate the setting command 15 in a first mode to request a lower gain between the quantity and the amount of weight relieved, which corresponds to a lower level of control aggressiveness, or in a second mode to request a higher gain between the quantity and the amount of weight, which corresponds to a higher level of control aggressiveness.

Control unit 12 is coupled to the setting command 15 to receive the setting signal emitted by the setting command 15.

Control unit 12 is configured to set the control function based on the setting signal emitted by the setting command 15.

In particular, control unit 12 extracts the piece of information carried by the setting signal about the driver request and satisfies the request accordingly.

The setting command 15 may be carried out in a variety of ways, such as through a keyboard, a control panel, a touch pad, a lever, and the like.

As clear from the above, control unit 12 carries out a method for controlling the hitch 2.

The method comprises the steps of:
a. determining the quantity indicative of the steering angle, and
b. controlling the drive assembly 7 as a function of the determined quantity.

Preferably, the drive assembly 7 is controlled during step b. to increase or decrease the amount of weight relieved as more as the quantity indicates higher or lower values of the steering angle, respectively.

In particular, the step b. comprises adjusting the fluid pressure within one or more of the actuators 9, which are adapted to increase the amount of weight relieved as more as the fluid pressure is higher.

Optionally, the method further comprises the step of:
c. detecting the activation signal indicating the operation of the activating command 14.

The step b. is carried out during, at, or after step c.

A further optional step of the method is:
d. setting the control function corresponding to the gain between the quantity and the amount of weight relieved.

The driving assembly 7 is controlled during step b. to relieve the amount of weight according to the set control function.

Conveniently, the control function is set during step d. based on the setting signal emitted by the setting command 15.

In particular, the control function is set during step d. to one of a plurality of predetermined constant gains.

As disclosed above, the determined quantity may correspond to the rotation angle of the steering wheel 11.

In view of the foregoing, the advantages of the method and apparatus according to the invention are apparent.

Indeed, the weight of the implement IM is relieved from the soil only when appropriate, i.e. when the vehicle 1 is steered. Otherwise, the implement IM exerts all its weight onto the soil, such that optimal performances in terms of quality are achieved.

By relieving the weight with a positive correlation with the steering angle, the vehicle 1 can be steered easily. The mobility of the vehicle 1 is thus optimally increased, without sensitive decreases of quality of the operation of the implement IM.

Furthermore, relieving the weight during the steering of vehicle 1 is beneficial on the stability of the latter. Indeed, the weight of the implement IM is transferred from the ground to the front part of the vehicle 1.

This improves traction and the capacity of steering of the vehicle 1.

Specifically, when the implement IM is a mower or a pickup rake, the transfer of weight reduces or suppresses the typical sideway sliding of the vehicle 1 when moving on the hillside.

Hence, the comfort and safety of the driver are increased.

Eventually, it is clear that modifications can be made to the described method and apparatus, which do not extend beyond the scope of protection defined by the claims.

For example, the control of the hitch 2 could also be applied to the rear hitch 3.

In addition, the hitch 2 may be a different kind of hitch with respect to that described and illustrated.

## Claims

1. A method for controlling a hitch (2) of a work vehicle (1), the work vehicle (1) comprising drive means (7) controllable to relieve an amount of weight of an implement (IM) attached to the hitch (2) and steering means (10) for setting a steering angle of the work vehicle (1), wherein the method comprises the steps of
a. determining a quantity indicative of the steering angle, and
b. controlling the drive means (7) as a function of the determined quantity.

2. The method of claim 1, wherein the drive means (7) are controlled during step b. to increase or decrease the amount of weight relieved as more as the quantity indicates higher or lower values of the steering angle, respectively.

3. The method of claim 1 or 2, wherein step b. comprises
b1. adjusting a fluid pressure within one or more hydraulic actuators (9) of the drive means (7) adapted to increase the amount of weight relieved as more as the fluid pressure is higher.

4. The method of any of the foregoing claims, further comprising the step of
c. detecting an activation signal indicating an operation of an activating command (14) of the work vehicle (1) being operable by a user,
wherein the step b. is carried out during, at, or after step c.

5. The method of any of the foregoing claims, further comprising the step of
d. setting a control function corresponding to a gain between the quantity and the amount of weight relieved,
wherein the drive means (7) are controlled during step b. to relieve the amount of weight according to the set control function.

6. The method of claim 5, wherein the control function is set during step d. based on a setting signal emitted by a setting command (15) of the work vehicle (1) being operable by a user.

7. The method of claim 5 or 6, wherein the control function is set during step d. to one of a plurality of predetermined constant gains.

8. The method of any of the foregoing claims, wherein the hitch (2) is a front hitch of the work vehicle (1).

9. The method of any of the foregoing claims, wherein the quantity corresponds to a rotation angle of a steering wheel (11) of the work vehicle (1).

10. An apparatus for controlling a hitch (2) of a work vehicle (1), the work vehicle (1) comprising drive means (7) controllable to relieve an amount of weight of an implement (IM) attached to the hitch (2) and steering means (10) for setting a steering angle of the work vehicle (1), wherein the apparatus comprises a control unit (12) programmed to implement the method of any of the foregoing claims.
